# FASCICULE DE BREVET EUROPEEN

(11) **EP 0 629 986 B1**
(45) Date de publication et mention de la délivrance du brevet: **04.12.1996**
(21) Numéro de dépôt: 94400990.1
(22) Date de dépôt: 06.05.1994
(51) Int. Cl.: G09B 5/04, G09B 19/06

(54) **Dispositif portable destiné à l'apprentissage d'une langue**
Tragbare Vorrichtung zum Erlernen einer Sprache
Portable device for learning a language

(30) Priorité: 06.05.1993 FR 9305425
(43) Date de publication de la demande: 21.12.1994
(73) Titulaire: Cholley, Sylvain, F-92410 Ville d'Avray (FR)
(72) Inventeur: Cholley, Sylvain, F-92410 Ville d'Avray (FR)
(74) Mandataire: Chêne, Philippe

(56) Documents cités:
- EP-A- 0 478 443
- DE-A- 4 129 129
- GB-A- 2 254 725
- US-A- 4 380 438
- US-A- 4 591 929
- US-A- 5 087 205

## Description

La présente invention concerne un dispositif portable destiné à l'apprentissage d'une langue à partir d'expressions linguistiques enregistrées sur un support lu par le dispositif.

Les laboratoires de langues sont bien connus pour l'apprentissage des langues étrangères. Lorsqu'un utilisateur désire utiliser ceux-ci en libre-service, il dispositif d'un magnétophone installé dans une cabine du laboratoire et de bandes magnétiques sur lesquelles sont enregistrées des expressions linguistiques que l'utilisateur écoute puis répète en vue de parfaire son accent, ces expressions linguistiques étant le plus souvent accompagnées de leur traduction. L'accès aux laboratoires de langues n'est cependant pas toujours aisé, en raison de leurs horaires d'ouverture ou de leur situation géographique. En outre, la manipulation du magnétophone devient rapidement fastidieuse lorsque l'utilisateur désire écouter plusieurs fois la même expression linguistique, auquel cas il doit actionner de façon répétée en retour inverse le magnétophone. De même, l'utilisateur doit actionner le magnétophone en avance rapide chaque expression linguistique qu'il s'est exercé lorsqu'il ne désire pas écouter la traduction l'accompagnant.

On connaît, par exemple les brevets GB 2 254 725, US 4 591 929 et EP 0478 443 des dispositifs portables pour l'apprentissage d'une langue, à partir d'un seul type d'expression linguistique enregistrée sur un support. Ils comprennent des moyens de mémorisation numérique de l'expression enregistrée et des moyens de restitution. Ces appareils présentent des possibilités d'utilisation réduites et ne permettent pas le choix de séquences et de types d'expression.

La présente invention vise à faciliter l'apprentissage d'une langue étrangère et a pour objet un dispositif portable perfectionné destiné à l'apprentissage de cette langue à partir d'expressions linguistiques de types différents enregistrées sur un support lu par le dispositif.

L'invention a donc pour objet un dispositif portable destiné à l'apprentissage d'une langue par un utilisateur à partir d'expressions linguistiques enregistrées sur un support lu par le dispositif, comportant:
- un support sur lequel les expressions linguistiques sont organisées,
- une unité centrale,
- des moyens de lecture intermittente du support,
- une mémoire,
- des moyens de mémorisation pour mémoriser, lors de la lecture du support, des expressions linguistiques dans une zone spécifique de la mémoire,
- des moyens d'enregistrement pour mémoriser, lors de l'exécution d'une instruction d'enregistrement du programme, dans une zone spécifique de la mémoire un signal délivré par un microphone et correspondant à une expression linguistique prononcée par l'utilisateur,
- des moyens de restitution vers des moyens d'écoute, lors de l'exécution d'une instruction d'écoute du programme, d'une expression linguistique, mémorisée dans une zone spécifique de la mémoire,
- des moyens de commande,
le dispositif étant caractérisé en ce que :
- les expressions linguistiques sont organisées sur le support en plusieurs séquences constituées chacune d'une expression linguistique de référence dans la langue à apprendre et d'au moins une autre expression linguistique d'un type différent, ces expressions linguistiques étant précédées de repères identifiant les expressions respectives et le type auquel elles appartiennent,
- l'unité centrale est programmable par l'utilisateur pour exécuter un programme défini comprenant une itération,
- les moyens de lecture intermittente du support sont commandés en lecture par l'unité centrale au début de l'exécution du programme pour lire une séquence complète enregistrée sur le support,
- les moyens de mémorisation mémorisent, lors de la lecture du support, au moins deux expressions linguistiques d'un type donné dans une zone spécifique de la mémoire désignée par l'unité centrale après identification du repère la précédant,
- les moyens de restitution restitue vers des moyens d'écoute, lors de l'exécution d'une instruction d'écoute du programme, une expression linguistique du type donné, mémorisée dans une zone spécifique de la mémoire sélectionnée par l'unité centrale selon le type d'expression qui est désirée à écouter,
- les moyens de commande permettent à l'utilisateur de sortir de l'itération en cours et de lancer une nouvelle exécution du programme pour la séquence suivante,
- le dispositif comporte des moyens de programmation par l'utilisateur de l'unité centrale de façon à permettre à ce dernier de définir pour chaque séquence le type des expressions linguistiques qu'il désire écouter et les instructions contenues dans l'itération.

Avantageusement, l'itération comporte une instruction d'enregistrement et les moyens de commande provoquent la sortie de l'itération et le lancement d'une nouvelle exécution du programme en cas d'absence de signal délivré par le microphone lors de l'exécution de l'instruction d'enregistrement.

Dans un mode de réalisation avantageux de l'invention, les moyens de lecture sont commandés en lecture par l'unité centrale au début de l'exécution du programme pour lire également les premières expressions linguistiques de types déterminés de la séquence suivante et ces premières expressions linguistiques sont mémorisées par les moyens de mémorisation dans des zones spécifiques de mémoire désignées par l'unité centrale de façon à permettre, lors du lancement d'une nouvelle exécution du programme, l'écoute de la première expression linguistique lue simultanément à sa mémorisation.

Dans le cas où le nombre n est égal à 1, lesdits moyens de mémorisation et de restitution sont de préférence constitués par deux convertisseurs aptes à assurer chacun une conversion analogique/numérique et une conversion numérique/analogique, associés l'un à deux zones spécifiques de la mémoire servant respectivement à la mémorisation de l'expression linguistique de référence et à la mémorisation de l'expression linguistique prononcée par l'utilisateur et l'autre à deux zones spécifiques de la mémoire attribuées respectivement à la mémorisation d'une expression linguistique correspondant à la traduction dans la langue de l'utilisateur de ladite expression linguistique de référence et à la mémorisation de la première expression linguistique d'un type déterminé de la séquence suivante.

Avantageusement, lesdites expressions linguistiques et lesdits repères sont enregistrés respectivement sur les deux pistes d'un enregistrement stéréophonique et lesdits moyens de support sont constitués par une bande magnétique.

Dans un mode de réalisation avantageux de l'invention, le dispositif comporte un afficheur et des moyens de commande de cet afficheur pour afficher le programme défini par l'utilisateur et les moyens de programmation comportent une touche de sélection provoquant le défilement sur l'afficheur des différentes instructions de programmation possibles et une touche de validation pour entrer dans le programme l'instruction affichée sélectionnée.

D'autres caractéristiques et avantages de la présente invention apparaîtront à la lecture de la description détaillée qui va suivre, d'un exemple de réalisation non limitatif de l'invention et à l'examen du dessin annexé sur lequel :
- la figure 1 est un schéma synoptique du dispositif,
- la figure 2 montre l'organisation des expressions linguistiques sur le support, et
- la figure 3 illustre la succession des opérations d'écoute et d'enregistrement correspondant à l'exécution par l'unité centrale d'un programme donné.

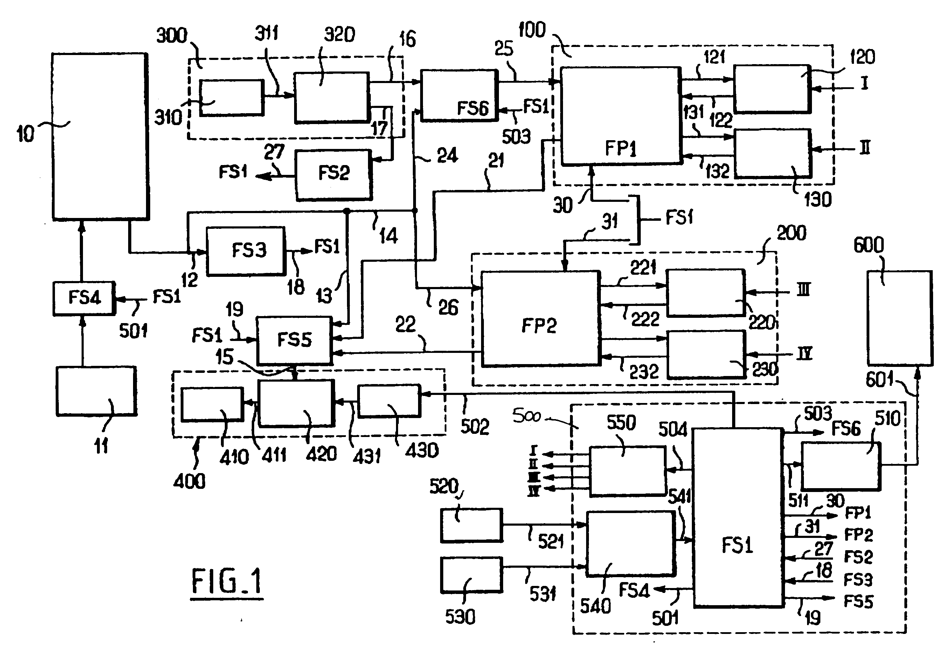

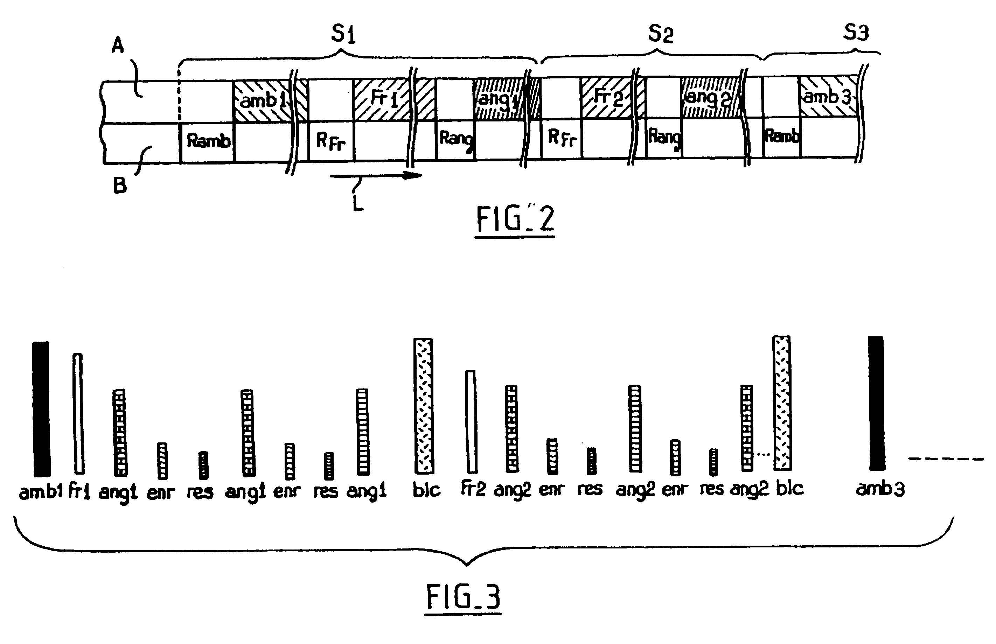

On a désigné sur la figure 1 par la référence 10 des moyens de lecture d'un support sur lequel sont enregistrées des expressions linguistiques. Le support, connu en lui-même et non représenté, est constitué dans l'exemple de réalisation décrit par une bande magnétique. Les expressions linguistiques sont organisées sur cette bande magnétique comme représenté sur la figure 2, en séquences S1, S2, S3, ... constituées chacune d'une expression linguistique de référence (respectivement désignée pour les séquences successives S1, S2, ... par "ang1", "ang2", ...) dans la langue à apprendre (dans cet exemple l'anglais) et d'au moins une expression linguistique (respectivement désignée par "Fr₁", "Fr₂" pour les séquences successives S1, S2, ...) d'un type différent (dans cet exemple la traduction en français des expressions linguistiques "ang1" et "ang2", ...).

Toutes les expressions linguistiques sont enregistrées sur une piste A d'un enregistrement stéréophonique et elles sont précédées sur l'autre piste B par des repères constitués par des signaux codés d'une façon connue en soi pour permettre l'identification. Plus particulièrement, dans l'exemple de réalisation décrit, la première séquence S1 comporte une expression linguistique "amb1", destinée à situer le contexte des expressions qui suivent, puis une expression linguistique "Fr₁", correspondant à la traduction en français de l'expression linguistique de référence en anglais "ang1" qui suit. La deuxième séquence S2 débute par une expression linguistique "Fr₂", correspondant à la traduction en français de l'expression linguistique de référence en anglais "ang2" qui suit. La troisième séquence S3 débute par une expression linguistique "amb3", destinée à situer le contexte des expressions suivantes.

Chacune des expressions linguistiques d'une séquence est précédée sur la piste B par un repère spécifique inscrit sur la bande lors de l'enregistrement, désigné respectivement par R_{amb}, R_{ang} et R_{Fr} selon qu'il est suivi par une expression destinée à situer le contexte, une expression de référence et une expression correspondant à la traduction de cette expression de référence.

Les moyens de lecture 10 sont constitués dans l'exemple de réalisation décrit par un magnétophone portable stéréophonique et le support est une bande magnétique. Ce magnétophone est alimenté en énergie électrique de façon intermittente par une source d'énergie électrique 11, constituée par des piles ou des batteries, reliées au magnétophone par l'intermédiaire de premiers **moyens de commutation FS4,** commandés en commutation par une unité centrale FS1.

Conformément à l'invention, l'unité centrale FS1 est programmable pour exécuter un programme défini par l'utilisateur et comportant une itération. Le magnétophone 10 est commandé en lecture par l'unité centrale FS1 au début de l'exécution du programme pour lire une séquence enregistrée sur la bande. Plus précisément, lorsque l'unité centrale FS1, reliée en 501 aux premiers **moyens de commutation FS4,** émet un signal de commande en lecture, ces derniers alimentent en énergie électrique le magnétophone 10.

Le magnétophone 10 lit alors la bande et délivre un signal stéréophonique sur deux voies A et B correspondant respectivement à la lecture des pistes A et B. La voie B est dirigée en 12 vers des moyens d'identification FS3 des repères et la voie A est dirigée en 13 et 14 respectivement vers des moyens d'écoute 400 et vers des moyens de mémorisation et de restitution qui vont être précisés dans la suite. Les moyens d'identification FS3 sont aptes à délivrer en 18 un signal vers l'unité centrale FS1 indiquant à cette dernière le type de l'expression linguistique qui suit le repère lu.

Les moyens d'écoute 400 comportent un casque 410 relié en 411 à la sortie d'un amplificateur 420. Cet amplificateur 420 amplifie un signal d'entrée reçu en 15 avec un gain modifiable par l'utilisateur de façon à régler le volume sonore du casque 410. Le réglage du gain s'effectue au moyen de deux touches de commande 520 et 530 reliées en 521 et 522 à une interface 540 elle-même reliée en 541 à l'unité centrale FS1 et cette dernière délivre en 502, en réponse aux actions exercées sur les touches 520 et 530 un signal de commande du volume sonore, respectivement dans le sens d'une augmentation ou d'une réduction de ce dernier, vers des moyens de commande 430 du gain de l'amplificateur 420, reliés en 431 à ce dernier.

Le signal dirigé en 13 vers les moyens d'écoute 400 aboutit à l'une des entrées de seconds moyens de commutation FS5 comportant trois entrées et une sortie reliée en 15 à l'amplificateur 420. Les seconds moyens de commutation FS5 sont adaptés à diriger le signal reçu en 13 vers l'entrée de l'amplificateur 420 lorsqu'ils reçoivent en 19 un signal de commande d'écoute émis par l'unité centrale FS1. Lors de la présence de ce signal de commande d'écoute, l'expression linguistique lue est restituée dans le casque 410.

Les moyens de mémorisation et de restitution précités comportent dans l'exemple de réalisation décrit deux convertisseurs FP1 et FP2 adaptés chacun à mettre sous forme numérique le signal analogique délivré en 14 par le magnétophone 10 en vue de le stocker dans une mémoire. Ces deux convertisseurs FP1 et FP2 sont également adaptés à restituer le signal stocké sous forme numérique dans ladite mémoire sous forme d'un signal analogique dirigé en 21 et en 22 respectivement pour les convertisseurs FP1 et FP2 vers les deux autres entrées des seconds moyens de commutation FS5.

La mémoire est divisée dans l'exemple de réalisation décrit en quatre zones spécifiques. Plus particulièrement, le premier convertisseur FP1 est associé à deux zones spécifiques référencées 120 et 130 et le deuxième convertisseur FP2 est associé à deux zones spécifiques référencées 220 et 230. Le convertisseur FP1 et les deux zones spécifiques 120 et 130 associées sont regroupés au sein d'un premier circuit intégré 100 connu en lui-même. Le convertisseur FP2 et les deux zones spécifiques 220 et 230 sont regroupés au sein d'un second circuit intégré 200 identique au premier.

Le signal délivré en 14 par le magnétophone 10 aboutit en 24 à l'une des entrées de troisièmes moyens de commutation FS6 comportant deux entrées et une sortie reliée en 25 au premier convertisseur FP1. Le signal délivré en 14 par le magnétophone 10 aboutit directement en 26 au deuxième convertisseur FP2. L'autre entrée des troisièmes moyens de commutation FS6 est reliée en 16 à des moyens d'enregistrement 300. Ces derniers comportent un amplificateur 320 recevant en entrée en 311 un signal délivré par un microphone 310. L'entrée de l'amplificateur 320 est de préférence équipée d'un compresseur de signal connu en soi permettant d'éviter tout réglage de niveau d'enregistrement. L'amplificateur 320 est relié en sortie en 16 comme décrit plus haut aux troisièmes moyens de commutation FS6 et en 17 à des moyens de commande FS2 adaptés à détecter une absence de signal délivré par le microphone 310 pour émettre dans ce cas en 27 un signal spécifique vers l'unité centrale FS1. Les troisièmes moyens de commutation FS6 sont commandés en commutation en 503 par l'unité centrale FS1 pour diriger ou non les signaux reçus en 16 et 24 vers le premier convertisseur FP1.

Les convertisseurs FP1 et FP2 sont commandés respectivement en 30 et 31 par l'unité centrale FS1, selon la nature du signal émis par cette dernière, en écriture dans les zones spécifiques de la mémoire ou en lecture du contenu de celles-ci et restitution vers les moyens d'écoute 400. La désignation de la zone spécifique dans laquelle les convertisseurs FP1 et FP2 doivent lire ou écrire s'effectue par l'unité centrale FS1 par l'intermédiaire de moyens de gestion 550 des zones spécifiques de la mémoire, recevant en entrée en 504 un signal d'adressage de l'unité centrale FS1 et adaptés à décoder ce signal pour indiquer en sortie par un signal émis en I, II, III ou IV, aux circuits intégrés 100 et 200 la zone spécifique concernée.

Le dispositif selon l'invention comporte également un afficheur 600 à cristaux liquides relié en 601 à des moyens de commande 510 de cet afficheur, eux-mêmes reliés en 511 à l'unité centrale FS1.

La programmation de l'unité centrale FS1 s'effectue avantageusement au moyen des deux touches 520 et 530 précitées.

Le fonctionnement du dispositif va maintenant être décrit en référence aux séquences S1 et S2 enregistrées sur la bande et dont le contenu a été précédemment décrit.

L'utilisateur commence par introduire la cassette dans le magnétophone puis met sous tension l'ensemble du dispositif. Le programme défini par l'utilisateur contient, dans l'exemple de réalisation décrit, au maximum sept instructions successives et de préférence l'unité centrale FS1 se programme elle-même à la mise sous tension selon un programme donné résidant dans une mémoire morte de l'unité centrale. Le jeu d'instructions dont dispose l'utilisateur est dans l'exemple de réalisation décrit le suivant : FR, GB, ENR, LEC, RETOUR x.

L'instruction FR correspond à l'écoute d'une expression linguistique correspondant à la traduction en français (ou plus généralement dans une langue que l'utilisateur connaît) de l'expression linguistique de référence contenue dans la séquence.

L'instruction GB correspond à l'écoute de l'expression linguistique de référence en anglais (ou plus généralement dans toute autre langue à apprendre) contenue dans la séquence.

L'instruction ENR correspond à l'enregistrement d'une expression linguistique prononcée dans le microphone par l'utilisateur.

L'instruction LEC correspond à l'écoute de l'expression linguistique prononcée par l'utilisateur.

L'instruction RETOUR, suivie d'un numéro x de pas de programme, permet la création d'une itération et l'exécution itérative des instructions contenues entre le pas de programme x et le pas de programme contenant l'instruction RETOUR.

Le programme résidant en mémoire morte de l'unité centrale FS1 et programmé à la mise sous tension est par exemple le suivant :
1 : FR
2 : GB
3 : ENR
4 : LEC
5 : RETOUR 2
6 :
7 :

Cette programmation correspond à l'écoute d'une phrase en français puis d'une phrase en anglais, à l'enregistrement de l'utilisateur puis à l'écoute de cet enregistrement et le retour à l'écoute de la phrase en anglais, etc.... A la mise sous tension et avant le lancement de l'exécution du programme, les différentes instructions programmées défilent sur l'afficheur 600. Pour modifier une ou plusieurs instructions de ce programme, l'utilisateur appuie sur la touche 520, dite touche de sélection, lorsque le numéro du pas de programmation et l'instruction contenue dans celui-ci, qu'il désire modifier, apparaît sur l'afficheur. Si l'utilisateur désire par exemple modifier les pas de programmation 4 et 5 pour y entrer respectivement les instructions GB et LEC, l'utilisateur appuie sur la touche de sélection 520 lorsque le quatrième pas de programmation apparaît sur l'afficheur. L'unité centrale FS1 est adaptée à arrêter le défilement à cet instant. L'afficheur 600 indique alors :
4 : LEC.

L'unité centrale FS1 est également adaptée à faire défiler toutes les instructions possibles à programmer lorsque des pressions successives sont exercées sur la touche 520. L'afficheur indique successivement :
4 : FR
4 : GB
4 : ENR
4: LEC
4: RETOUR

Lorsque l'afficheur indique :
4 : GB l'utilisateur appuie sur la touche 530, dite touche de validation, pour entrer l'instruction GB dans le programme. L'unité centrale FS1 est adaptée à provoquer ensuite un nouveau défilement sur l'afficheur 600 du contenu du programme. Pour modifier le cinquième pas de programmation, l'utilisateur procède de la même façon.

Lorsque l'utilisateur sélectionne l'instruction RETOUR et appuie sur la touche de validation 530, il choisit ensuite le numéro x du pas de programmation accompagnant cette instruction, par pressions successives sur la touche de sélection 520. L'afficheur indique successivement:
RETOUR 1,
RETOUR 2,
RETOUR 3,
RETOUR 4,
RETOUR 5,
RETOUR 6,
RETOUR 1, ...
L'utilisateur appuie sur la touche de validation 530 lorsque l'afficheur indique le numéro x du pas qu'il souhaite entrer.

On suppose dans la suite que l'unité est programmée de la façon suivante :
1 : FR
2 : GB
3 : ENR
4: LEC
5 : RETOUR 2.

Après programmation de l'unité centrale, l'utilisateur lance l'exécution du programme en enclenchant en lecture le magnétophone 10. Les touches 520 et 530 ne servent plus alors à la programmation mais au réglage du volume sonore du casque comme décrit plus haut.

Au début de l'exécution du programme, l'unité centrale FS1 commande en lecture le magnétophone 10 pour lire la première séquence S1 enregistrée sur la cassette. Un signal de commande en lecture est donc envoyé en 501 aux premiers moyens de commutation FS4. Lors de la lecture de la bande selon la flèche L, les moyens d'identification FS3 détectent et identifient le repère R_{amb} émis sur la voie B et précédant l'expression linguistique destinée à situer le contexte "amb1", qui sera émise ensuite sur la voie A. Les moyens d'identification FS3 indiquent à l'unité centrale FS1 que l'expression à venir est une expression linguistique destinée à situer le contexte, et l'unité centrale FS1 est préprogrammée de façon à ne pas stocker dans la mémoire ce type d'expression linguistique qui doit être simplement écoutée par l'utilisateur, simultanément à sa lecture par le magnétophone 10. Les seconds moyens de commutation FS5 reçoivent par conséquent en 19 un signal de commande émis par l'unité centrale FS1 leur indiquant de transmettre le signal reçu en 13 vers l'amplificateur 420. Après écoute de l'expression linguistique "amb1", les moyens d'identification FS3 détectent et identifient le repère R_{Fr} présent sur la voie B et indiquent par un signal spécifique en 18 à l'unité centrale FS1 qu'il s'agit d'une expression linguistique correspondant à la traduction d'une expression linguistique de référence. L'unité centrale FS1 est préprogrammée pour provoquer la mémorisation de ce type d'expression linguistique. Etant donné que le programme défini par l'utilisateur comporte au premier pas de programmation l'instruction FR, l'écoute de l'expression linguistique "Fr₁" sera effectuée simultanément à sa mémorisation. Les seconds moyens de commutation FS5 sont donc commandés en 19 de façon à transmettre le signal reçu en 13 vers l'entrée de l'amplificateur 420. L'expression linguistique "Fr₁" est mémorisée dans la zone spécifique 220 désignée par l'envoi d'un signal approprié en III émis par les moyens de gestion de la mémoire 550, commandés par l'unité centrale FS1. Le convertisseur FP2 reçoit en 26 le signal analogique émis sur la voie A par le magnétophone 10 lors de la lecture de l'expression linguistique "Fr₁" et il est commandé simultanément en 31 en écriture dans la zone spécifique 220 par l'unité centrale FS1. Le signal analogique est converti en signal numérique et transféré en 221 dans la zone spécifique 220. Après écoute et mémorisation simultanée de l'expression linguistique "Fr₁", les moyens d'identification FS3 détectent le repère R_{ang} et indiquent à l'unité centrale FS1 que l'expression qui suit sur la voie A est une expression linguistique de référence en anglais. L'unité centrale FS1 est préprogrammée pour provoquer la mémorisation de ce type d'expression linguistique. Cette mémorisation se fera simultanément à l'écoute étant donné que la deuxième instruction du programme défini par l'utilisateur est GB. Les seconds moyens de commutation FS5 sont donc commandés en 19 par l'unité centrale FS1 de façon à transmettre le signal reçu en 13 vers l'entrée de l'amplificateur 420. L'expression linguistique de référence en anglais est mémorisée dans la zone spécifique 130 de la mémoire, désignée par l'envoi en II d'un signal approprié émis par les moyens de gestion de la mémoire 550. Les troisièmes moyens de commutation FS6 sont commandés de façon à transmettre le signal reçu en 24 vers l'entrée 25 du premier convertisseur FP1. Ce dernier est commandé simultanément en écriture dans la zone spécifique 130 par réception en 30 d'un signal de commande approprié émis par l'unité centrale FS1. Le signal analogique émis sur la voie A est mis sous forme numérique et transféré en 131 dans la zone spécifique 130.

Le déroulement de la bande se poursuit et les moyens d'identification FS3 détectent ensuite un nouveau repère R_{Fr}. L'unité centrale est préprogrammée de façon à reconnaître ainsi la fin d'une séquence. L'unité centrale FS1 exécute alors l'instruction suivante du programme qui est dans l'exemple décrit l'instruction d'enregistrement ENR. L'expression linguistique prononcée par l'utilisateur dans le microphone 310 est mémorisée dans la zone spécifique 120 de la mémoire, désignée par l'envoi en I d'un signal approprié émis par les moyens de gestion 550 de la mémoire. Les troisièmes moyens de commutation FS6 sont commandés pour diriger le signal émis en 16 par l'amplificateur 320 à l'entrée du premier convertisseur FP1. Ce dernier est commandé en écriture par un signal de commande reçu en 30 et le signal reçu en 25 est mis sous forme numérique et transféré en 121 dans la zone spécifique 120. L'enregistrement de l'utilisateur s'effectue pendant un laps de temps déterminé, fixé, dans l'exemple décrit à 20 secondes. L'unité centrale FS1 exécute ensuite l'instruction suivante qui est dans le cas de l'exemple décrit l'instruction LEC d'écoute de la phrase enregistrée par l'utilisateur. Le premier convertisseur FP1 est alors commandé en lecture en 30 par l'unité centrale FS1 de la zone spécifique 120 de la mémoire, désignée par l'envoi en I d'un signal approprié émis par les moyens de gestion 550 et le contenu de cette zone est transféré en 122 pour reconstituer un signal analogique envoyé en 21, vers l'amplificateur 420, au travers des seconds moyens de commutation FS5 commandés de façon à diriger le signal délivré par le convertisseur FP1 vers l'entrée de l'amplificateur 420. Après exécution de l'instruction d'écoute LEC, l'unité centrale FS1 rencontre l'instruction RETOUR 2 et exécute à nouveau l'instruction contenue dans le deuxième pas de programmation, c'est-à-dire l'instruction d'écoute de la phrase de référence en anglais. Le processus se répète selon la figure 3 jusqu'à ce que les moyens de commande FS2 détectent un silence de l'utilisateur ou blanc BLC pendant l'exécution de l'instruction d'enregistrement ENR et envoie en 27 un signal spécifique à l'unité centrale FS1. Cette dernière est préprogrammée pour interpréter ce signal comme indiquant l'arrêt de l'exécution de l'itération en cours, le lancement d'une nouvelle exécution du programme et le passage à la séquence S2 suivante.

Avantageusement, l'unité centrale FS1 est préprogrammée pour continuer à commander en lecture les moyens de lecture 10, après avoir détecté la fin de la première séquence S1, de façon à mémoriser dans la zone spécifique 230 de la mémoire l'expression linguistique "Fr₂" de la deuxième séquence S2, correspondant à la traduction de l'expression linguistique de référence "ang2". L'intérêt de mémoriser la première expression linguistique d'un type donné, ici la traduction en français de l'expression linguistique de référence, apparaît dans le cas où le programme contient en première instruction une instruction autre que l'écoute de cette première expression linguistique.

Supposons par exemple que le programme défini par l'utilisateur soit le suivant :
1 : GB
2 : ENR
3 : LEC
4 : FR
5 : RETOUR 1.

Dans ce cas, après détection d'un silence de l'utilisateur pendant l'exécution de l'instruction d'enregistrement ENR et lancement d'une nouvelle exécution du programme pour la deuxième séquence S2, l'expression linguistique "Fr₂" est déjà stockée dans la zone spécifique 230 de la mémoire et lorsque les moyens de lecture 10 sont à nouveau commandés en lecture de la deuxième séquence S2 par l'unité centrale FS1, cette lecture débute directement par l'expression linguistique de référence "ang2".

Etant donné que la première instruction du programme correspond à l'écoute de cette expression, celle-ci peut être effectuée simultanément à sa mémorisation dans la zone spécifique 130 de la mémoire.

Viennent ensuite les instructions d'enregistrement ENR et de lecture LEC provoquant le transfert en 121 dans la zone spécifique 120 de la mémoire puis la restitution en 122 du contenu mémorisé. L'exécution de l'instruction FR provoque ensuite le transfert en 232 du contenu mémorisé dans la zone spécifique 230 et sa restitution par les moyens d'écoute 400. L'exécution de l'instruction RETOUR 1 provoque une nouvelle exécution de l'instruction d'écoute GB et le transfert en 132 du contenu mémorisé dans la zone spécifique 130, etc....

La notion d'itération doit être comprise dans un sens large et peu également désigner, par exemple, l'éxécution d'une boucle ne contenant aucune instruction d'écoute ou d'enregistrement particulière et dont le seul rôle serait d'attendre la détection d'un signal de commande de l'utilisateur indiquant la fin de l'attente et le lancement d'une nouvelle exécution du programme pour la séquence suivante.

A titre indicatif, les circuits intégrés 100 et 200 sont de type connus sous la référence commerciale UM 93 510A.

L'amplificateur 320 est avantageusement constitué par un amplificateur intégré prévu sur le circuit intégré UM 93 510A.

Les moyens de commande FS2 sont de type connus sous la référence commerciale LM 393.

Les troisièmes moyens de commutation sont de type connus sous la référence commerciale 74 HC 4052.

Les moyens d'identification FS3 sont de type connus sous la référence commerciale MT 3270.

L'amplificateur 420 est de type connu sous la référence commerciale TL 072 et les moyens de commande du gain de type connus sous la référence commerciale X 9103.

L'afficheur 600 est de type connu sous la référence commerciale LTN 111 R 10.

Les moyens de saisie 540, de gestion de la mémoire 550 et de commande 510 de l'afficheur 600 sont regroupés avec l'unité centrale FS1 dans un ensemble 500 constitué par deux circuits intégrés de type connus sous les références commerciales 80 C 31 et 27 C 64.

La présente invention n'est pas limitée à l'exemple de réalisation qui vient d'être décrit. On peut notamment proposer, sans sortir de son cadre, d'autres types de support, par exemple des disques à lecture optique. On peut également proposer des moyens de commande FS2 fonctionnant autrement que par détection d'un silence de l'utilisateur, par exemple par détection d'une pression exercée sur une touche de commande. On peut en outre proposer d'accroître le nombre d'instructions programmables pour adapter le dispositif à l'apprentissage de plusieurs langues étrangères enregistrées sur un même support.

## Revendications

1. Dispositif portable destiné à l'apprentissage d'une langue par un utilisateur à partir d'expressions linguistiques enregistrées sur un support lui par le dispositif, comportant :
- un support sur lequel les expressions linguistiques sont organisées,
- une unité centrale (FS1),
- des moyens de lecture intermittente (10) du support,
- une mémoire (120, 130, 220, 230),
- des moyens de mémorisation pour mémoriser, lors de la lecture du support, des expressions linguistiques dans une zone spécifique de la mémoire,
- des moyens d'enregistrement pour mémoriser, lors de l'exécution d'une instruction d'enregistrement (ENR) du programme, dans une zone spécifique de la mémoire un signal délivré par un microphone (310) et correspondant à une expression linguistique prononcée par l'utilisateur,
- des moyens de restitution vers des moyens d'écoute (400), lors de l'exécution d'une instruction d'écoute (FR, GB, LEC) du programme, d'une expression linguistique, mémorisée dans une zone spécifique de la mémoire,
- des moyens de commande (FS2),
le dispositif étant caractérisé en ce que :
- les expressions linguistiques sont organisées sur le support en plusieurs séquences S constituées chacune d'une expression linguistique de référence (ANG1) dans la langue à apprendre et d'au moins une autre expression linguistique (amb1, FR₁) d'un type différent, ces expressions linguistiques étant précédées de repères identifiant les expressions respectives et le type auquel elles appartiennent,
- l'unité centrale (FS1) est programmable par l'utilisateur pour exécuter un programme défini comprenant une itération,
- les moyens de lecture intermittente (10) du support sont commandés en lecture par l'unité centrale au début de l'exécution du programme pour lire une séquence (S) complète enregistrée sur le support.
- les moyens de mémorisation mémorisent, lors de la lecture du support, au moins deux expressions linguistiques d'un type donné dans une zone spécifique de la mémoire désignée par l'unité centrale après indentification du repère la précédant,
- les moyens de restitution restituent vers des moyens d'écoute (400), lors de l'exécution d'une instruction d'écoute (FR, GB, LEC) du programme, une expression linguistique du type donné, mémorisée dans une zone spécifique de la mémoire sélectionnée par l'unité centrale selon le type d'expression qui est désirée à écouter,
- les moyens de commande (FS2) permettent à l'utilisateur de sortir de l'itération en cours et de lancer une nouvelle exécution du programme pour la séquence suivante,
- le dispositif comporte des moyens de programmation (FS4) par l'utilisateur de l'unité centrale de façon à permettre à ce dernier de définir pour chaque séquence le type des expressions linguistiques qu'il désire écouter et les instructions contenues dans l'itération.

2. Dispositif selon la revendication 1, caractérisé en ce que le ladite itération comporte une instruction d'enregistrement (ENR) et en ce que lesdits moyens de commande (FS2) provoquent la sortie de l'itération et le lancement d'une nouvelle exécution du programme en cas d'absence de signal délivré par le microphone lors de l'exécution de l'instruction d'enregistrement.

3. Dispositif selon l'une quelconque des revendications 1 et 2, caractérisé en ce que les moyens de lecture (10) sont commandés en lecture par ladite unité centrale au début de l'exécution du programme pour lire également les n premières expressions linguistiques de types déterminés de la séquence suivante et en ce que ces n premières expressions linguistiques sont mémorisées par lesdits moyens de mémorisation dans des zones spécifiques de ladite mémoire désignées par ladite unité centrale, de façon à permettre, lors du lancement d'une nouvelle exécution du programme, l'écoute de la première expression linguistique lue simultanément à sa mémorisation.

4. Dispositif selon la revendication 3, caractérisé en ce que le nombre n est égal à 1.

5. Dispositif selon la revendication 4, caractérisé en ce que lesdits moyens de mémorisation et de restitution sont constitués par deux convertisseurs (FP1, FP2) aptes à assurer chacun une conversion analogique/numérique et une conversion numérique/analogique, associés l'un (FP1) à deux zones spécifiques (130, 120) de la mémoire attribuées respectivement à la mémorisation de l'expression linguistique de référence (ang1) et à la mémorisation de l'expression linguistique prononcée par l'utilisateur et l'autre (FP2) à deux zones spécifiques (220, 230) de la mémoire attribuées respectivement à la mémorisation d'une expression linguistique correspondant à la traduction (Fr₁) dans la langue de l'utilisateur de ladite expression linguistique de référence et à la mémorisation de la première expression linguistique d'un type déterminé (Fr₂) de la séquence suivante.

6. Dispositif selon l'une quelconque des revendications 1 à 5, caractérisé en ce que les expressions linguistiques et lesdits repères sont enregistrés respectivement sur les deux pistes (A, B) d'un enregistrement stéréophonique.

7. Dispositif selon l'une quelconque des revendications 1 à 6, caractérisé en ce que les moyens de support sont constitués par une bande magnétique.

8. Dispositif selon l'une quelconque des revendications 1 à 7, caractérisé en ce qu'il comporte un afficheur (600) et des moyens de commande de cet afficheur (600) et des moyens de commande de cet afficheur (510) pour afficher le programme défini par l'utilisateur et en ce que les moyens de programmation comportent une touche de sélection (520) provoquant le défilement sur l'afficheur des différentes instructions de programmation possibles et une touche de validation (530) pour entrer dans le programme l'instruction affichée sélectionnée.

## Claims

1. Portable device intented for the learning of a language by a user on the basis of linguistic expressions recorded on a medium read by the device, comprising :
- a medium on which linguistic expressions are organised,
- a central unit (FS1),
- means for intermittently reading (10) said medium,
- a memory (120, 130, 220, 230),
- means for storing, during reading of the medium, linguistic expressions on a specific zone of said memory,
- recording means for storing, during execution of a record (REC) instruction of said program, in a specific zone of said memory, a signal supplied by a microphone (310) and corresponding to a linguistic expression spoken by the user,
- means for retrieving and feeding to means of monitoring (400), during execution of a monitoring instruction (FR, GB, MON) of said program, a linguistic expression stored in a specific zone of said memory,
- control means (FS2),
said device being characterised in that :
- said linguistic expressions are organised on the medium in several sequences (S) consisting of a reference linguistic expression (Engl) in the langage to be learned and at least one other linguistic expression (ambl, Frl) of a different type, these linguistic expressions being preceded by identifying markers, of respective expressions and their type ,
- a central unit (FS1) is programmable by the user to execute a defined program comprising an iteration ,
- means for intermittently reading (10) said medium are controlled by said central unit at the commencement of the execution of the program in order to read a whole sequence (S) recorded on the medium,
- means for storing which store, during reading of the medium, at least two linguistic expressions of a given type in a specific zone of said memory designated by the central unit following identification of the marker preceding it ,
- means for retrieving which retrieve to means of monitoring (400), during execution of a monitoring instruction (FR, GB, MON) of said program, a linguistic expression of a given type, stored in a specific zone of said memory selected by said central unit, according to type of expression which is to be listened allow the user to exit from the current iteration and to initiate a new execution of the program for the next sequence,
- the device includes means (FS4) whereby the user may program said central unit to enable said unit to define for each sequence the type of linguistic expressions to which he wishes to listen and the instructions contained in the iteration.

2. Device according to claim 1, characterised in that said iteration comprises a record instruction (REC) and in that said control means (FS2) cause the exit from the iteration and the initiation of a new execution of the program in the absence of any signal from the microphone during execution of the record instruction.

3. Device according to either of the claims 1 and 2, characterised in that the reading means (10) are controlled by the said central unit at the commencement of execution of the program to read also the first n linguistic expressions of given types from the following sequence and in that these first n linguistic expressions are stored by the said storage means in specific zones of the said memory designated by the said central unit, so as to permit, when the program is next run, monitoring of the first linguistic expression read simultaneously with its storage.

4. Device according to claim 3, characterised in that the number n is equal to 1.

5. Device according to claim 4, characterised in that said means of storage and retrieval consist of two converters (FP1, FP2) each capable of analogue/digital and digital/analogue conversion, one (FP1) associated with two specific zones (130, 120) of the memory assigned respectively to storing the reference linguistic expression (Engl) and to storing the linguistic expression spoken by the user, and the other (FP2) to two specific zones (220, 230) of the memory assigned respectively to storing a linguistic expression corresponding to the translation (Frl) in the user's language of the said reference linguistic expression and to the storage of the first linguistic expression of a given type (Fr2) of the following sequence.

6. Device according to any the claims 1 to 5, characterised in that the linguistic expressions and said markers are recorded respectively on the two tracks (A, B) of a stereophonic recording.

7. Device according to any of the claims 1 to 6, characterised in that said media consists of a magnetic tape.

8. Device according to any of the claims 1 to 7, characterised in that it comprises a display system (600) and means of controlling this display system (510) in order to display the program defined by the user and in that the means of programming comprise a selection key (520) causing the different possible programming instructions to scroll on the display system and a validation key (530) for entering the selected displayed instruction into the program.

## Patentansprüche

1. Tragbare Vorrichtung zum Erlernen einer Sprache durch einen Verwender ab sprachlichen Ausdrücken, die auf einem von der Vorrichtung gelesenen Träger aufgezeichnet sind, bestehend aus:
- einem Träger, auf dem die sprachlichen Ausdrücke organisiert sind,
- einer Zentraleinheit (FS1),
- intermittenten Lesemitteln (10) des Trägers,
- einem Speicher (120, 130, 220, 230),
- Speichermitteln zum Speichern, beim Lesen des Trägers, der sprachlichen Ausdrücke in einer spezifischen Speicherzone,
- Aufzeichnungsmitteln zum Speichern, bei der Ausführung einer Aufzeichnungsanweisung (ENR) des Programms, in einer spezifischen Zone des Speichers eines von einem Mikrofon (310) gelieferten Signals, das einem vom Verwender ausgesprochenen sprachlichen Ausdruck entspricht,
- Wiedergabemitteln zu Abhörmitteln (400), bei der Ausführung einer Abhöranweisung (FR, GB, LEC) des Programms, eines sprachlichen Ausdrucks, der in einer spezifischen Zone des Speichers gespeichert ist,
- Steuermitteln (FS2),
wobei die Vorrichtung dadurch gekennzeichnet ist, dass:
- die sprachlichen Ausdrücke auf dem Träger in mehreren Sequenzen S organisiert sind, die jeweils einen sprachlichen Referenzausdruck (ANG1) in der zu erlernenden Sprache und mindestens einen anderen sprachlichen Ausdruck (amb1, FR1) einer anderen Art beinhalten, wobei diesen sprachlichen Ausdrücken Kennzeichen vorausgehen, die die jeweiligen Ausdrücke und die Art, der sie angehören, identifizieren,
- die Zentraleinheit (FS1) vom Verwender programmierbar ist, um ein definiertes Programm mit einer Iteration auszuführen,
- das Lesen der intermittenten Lesemittel (10) des Trägers bei Beginn der Programmausführung von der Zentraleinheit gesteuert wird, um eine komplette, auf dem Träger aufgezeichnete Sequenz (S) zu lesen,
- die Speichermittel beim Lesen des Trägers mindestens zwei sprachliche Ausdrücke einer gegebenen Art in einer spezifischen Zone des Speichers speichern, die von der Zentraleinheit nach Identifizierung des ihnen vorangehenden Kennzeichens bezeichnet wird,
- die Wiedergabemittel bei der Ausführung einer Abhöranweisung (FR, GB, LEC) des Programms einen sprachlichen Ausdruck der gegebenen Art, der in einer spezifischen Zone des Speichers gespeichert ist, die von der Zentraleinheit je nach Ausdrucksart, die man hören möchte, gewählt wurde, in Abhörmitteln (400) wiedergeben,
- die Steuermittel (FS2) dem Verwender ermöglichen, die laufende Iteration zu verlassen und eine neue Ausführung des Programms für die nächste Sequenz zu starten,
- die Vorrichtung Programmiermittel (FS4) der Zentraleinheit durch den Verwender umfasst, um ihm zu ermöglichen, für jede Sequenz die Art der sprachlichen Ausdrücke zu definieren, die er hören möchte, sowie die in der Iteration enthaltenen Anweisungen.

2. Vorrichtung nach Anspruch 1, dadurch gekennzeichnet, dass die besagte Iteration eine Aufzeichnungsanweisung (ENR) umfasst, und dass die besagten Steuermittel (FS2) das Verlassen der Iteration und den Start einer neuen Ausführung des Programms bewirken, wenn bei der Ausführung der Aufzeichnungsanweisung kein Signal vom Mikrofon geliefert wird.

3. Vorrichtung nach einem der Ansprüche 1 und 2, dadurch gekennzeichnet, dass das Lesen der Lesemittel (10) von der besagten Zentraleinheit bei Programmbeginn gesteuert wird, um ebenfalls die x ersten sprachlichen Ausdrücke bestimmter Arten der nächsten Sequenz zu lesen, und dass diese x ersten sprachlichen Ausdrücke von den besagten Speichermitteln in spezifischen Zonen des besagten Speichers gespeichert werden, die von der besagten Zentraleinheit bezeichnet werden, um beim Start einer neuen Programmausführung das Abhören des ersten sprachlichen Ausdrucks zu ermöglichen, der gleichzeitig während des Speicherns gelesen wird.

4. Vorrichtung nach Anspruch 3, dadurch gekennzeichnet, dass die Anzahl x gleich 1 ist.

5. Vorrichtung nach Anspruch 4, dadurch gekennzeichnet, dass die besagten Speicher- und Wiedergabemittel aus zwei Wandlern (FP1, FP2) bestehen, die jeweils eine Analog-/Digital-Umkehrung und eine Digital-/Analog-Umkehrung durchführen können, wobei einer (FP1) zwei spezifischen Zonen (130, 120) des Speichers zugeordnet ist, die jeweils zum Speichern des sprachlichen Referenzausdrucks (angl) und zum Speichern des vom Verwender ausgesprochenen sprachlichen Ausdrucks dienen, und der andere (FP2) zwei spezifischen Zonen (220, 230) des Speichers, die jeweils zum Speichern eines sprachlichen Ausdrucks dienen, der der Übersetzung (Fr1) in die Sprache des Verwenders des besagten sprachlichen Referenzausdrucks entspricht, und zum Speichern des ersten sprachlichen Ausdrucks einer bestimmten Art (Fr2) der nächsten Sequenz.

6. Vorrichtung nach einem der Ansprüche 1 bis 5, dadurch gekennzeichnet, dass die besagten sprachlichen Ausdrücke und die besagten Kennzeichen jeweils auf zwei Spuren (A, B) einer stereophonischen Aufzeichnung aufgezeichnet sind.

7. Vorrichtung nach einem der Ansprüche 1 bis 6, dadurch gekennzeichnet, dass die Trägermittel aus einem Magnetband bestehen.

8. Vorrichtung nach einem der Ansprüche 1 bis 7, dadurch gekennzeichnet, dass sie einen Anzeiger (600) und Steuermittel dieses Anzeigers (600) umfasst, um das vom Verwender definierte Programm anzuzeigen, und dass die Programmiermittel eine Auswahltaste (520) zum Ablaufenlassen auf dem Anzeiger der verschiedenen möglichen Programmieranweisungen und eine Validierungstaste (530) zur Eingabe in das Programm der ausgewählten angezeigten Anweisung umfassen.
